# FASCICULE DE BREVET EUROPEEN

(11) **EP 2 903 841 B1**
(45) Date de publication et mention de la délivrance du brevet: **30.11.2016**
(21) Numéro de dépôt: 13783351.3
(22) Date de dépôt: 24.09.2013
(51) Int. Cl.: B60H 3/00

(54) **PROCÉDÉ DE TRAITEMENT INTERNE D'UNE INSTALLATION DE CHAUFFAGE/CLIMATISATION PAR COUPLAGE À UN DISPOSITIF DE TRAITEMENT D'AIR**
VERFAHREN ZUR INTERNEN BEHANDLUNG EINER HEIZUNGS-/KLIMATECHNISCHEN ANLAGE DURCH KOPPLUNG AN EINE LUFTBEHANDLUNGSVORRICHTUNG
METHOD OF INTERNAL TREATMENT OF A HEATING/AIR CONDITIONING FACILITY BY COUPLING TO AN AIR TREATMENT DEVICE

(30) Priorité: 03.10.2012 FR 1259402
(43) Date de publication de la demande: 12.08.2015
(73) Titulaire: Peugeot Citroën Automobiles SA, 78140 Vélizy Villacoublay (FR)
(72) Inventeur: DUMUR, Denis, F-78990 Elancourt (FR); POT, Vincent, F-75013 Paris (FR); KERVAREC, Florian, F-91310 Longpont sur Orge (FR); PINTAT, Bruno, F-92140 Clamart (FR)
(86) Numéro de dépôt international: PCT/FR2013/052230
(87) Numéro de publication internationale: WO 2014/053741

(56) Documents cités:
- EP-A1- 1 745 805
- WO-A1-2005/075895
- WO-A1-2010/010289
- WO-A2-2010/032107
- US-B1- 6 233 963

## Description

L'invention concerne le traitement de certaines installations de chauffage/climatisation qui sont couplées à des enceintes.

On notera que l'invention concerne tout type d'enceinte, et notamment les habitacles de véhicule, éventuellement de type automobile, les pièces ou salles de bâtiments, et les vérandas.

Comme le sait l'homme de l'art, de nombreuses installations de chauffage/climatisation comprennent une boucle froide comportant un évaporateur au niveau duquel se produit de la condensation qui est en partie emportée par le flux d'air pulsé qui circule. Les gouttes de condensation emportées par le flux d'air pulsé ont tendance à se déposer sur les parois internes de l'installation de chauffage/climatisation, et notamment celles qui définissent la chambre de mixage et les différents conduits de circulation d'air. Ce dépôt humide sur les parois internes favorise, hélas, le développement de bio films et/ou de bactéries et/ou d'algues, qui induisent généralement des odeurs nauséabondes dans l'enceinte concernée, et/ou de virus, qui peuvent ensuite diffuser dans l'enceinte concernée.

Afin de limiter ces développements, il a été proposé de pulvériser ou diffuser un produit de traitement (désinfectant ou décontaminant) en amont et/ou en aval de l'évaporateur. Hélas, cette solution complexifie et/ou augmente l'encombrement de l'installation de chauffage/climatisation, et nécessite des interventions manuelles relativement difficiles (du fait de l'exiguïté) pour renouveler régulièrement le produit de traitement. En outre, cette solution ne s'avère pas très efficace dans les zones internes qui sont éloignées de l'évaporateur, et notamment dans les conduits de distribution d'air.

Un procédé de traitement d'un type connu est décrit par le document WO 2005/075895 A1, qui constitue l'art antérieur le plus proche.

L'invention a donc pour but de proposer une solution alternative radicalement différente de la solution précitée.

Elle propose plus précisément un procédé, dédié au traitement d'une installation de chauffage/climatisation couplée à une enceinte, et comprenant :
- une étape (i) dans laquelle on couple, via un conduit de couplage, une sortie choisie de l'installation (qui devient alors une entrée) à une sortie d'un dispositif de traitement d'air qui est propre à délivrer un flux d'air traité, par adjonction de gouttes très petites obtenues par nébulisation et mélangées avec un produit de traitement, et
- une étape (ii) dans laquelle on fait fonctionner le dispositif de traitement d'air afin de faire pénétrer le flux d'air traité à l'intérieur de l'installation, via la sortie choisie de l'installation (qui sert alors d'entrée), pour traiter une partie au moins de l'intérieur de cette installation.

Ainsi, non seulement l'installation de chauffage/climatisation n'a pas besoin d'être modifiée pour pouvoir être traité intérieurement, mais encore on peut désormais traiter efficacement certains au moins de ses conduits de distribution d'air, ainsi qu'éventuellement sa chambre de mixage et/ou la zone qui contient son évaporateur.

Le procédé de traitement selon l'invention peut comporter d'autres caractéristiques qui peuvent être prises séparément ou en combinaison, et notamment :
- dans l'étape (ii), le flux d'air peut être aspiré dans l'enceinte avant d'être traité (et éventuellement pulsé) ;
   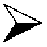 dans l'étape (ii), on peut placer des volets de distribution d'air dédiés à l'aération de l'enceinte et un volet d'alimentation en air de l'installation respectivement dans une position fermée et dans une position n'autorisant qu'une alimentation en air extérieur à l'enceinte, de manière à créer une surpression dans l'installation (destinée à faire pénétrer la nébulisation dans la quasi-totalité de cette dernière) ;
- le flux d'air peut être pulsé avant d'être traité ;
- on peut traiter certains au moins des conduits de circulation d'air et au moins un évaporateur de l'installation ;
- le produit de traitement peut être choisi parmi au moins un produit décontaminant et un produit désinfectant ;
- à l'étape (ii), on peut commencer par déterminer si l'enceinte ne comprend pas de personne et si des portes et fenêtres qu'elle comprend sont toutes fermées, et dans l'affirmative on fait fonctionner le dispositif de traitement d'air ;
- on peut, par exemple, réaliser la nébulisation du liquide par effet piézoélectrique. Mais d'autres techniques de nébulisation peuvent être utilisées ;
- il peut être adapté au traitement d'une installation de chauffage/climatisation qui est couplée à une enceinte constituant un habitacle de véhicule ;
   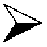 dans l'étape (i), on peut, par exemple, coupler le conduit de couplage à une bouche de diffusion propre à alimenter en air réfrigéré une boîte à gants du véhicule. Mais, on peut également utiliser une sortie/entrée de traitement dédiée de l'installation.

D'autres caractéristiques et avantages de l'invention apparaîtront à l'examen de la description détaillée ci-après, et des dessins annexés, sur lesquels :
- la figure 1 illustre schématiquement et fonctionnellement une installation de chauffage/climatisation de véhicule automobile couplée à un dispositif de traitement d'air pour la mise en oeuvre d'un procédé de traitement selon l'invention, et
- la figure 2 illustre schématiquement et fonctionnellement un exemple de réalisation du dispositif de traitement d'air de la figure 1.

L'invention a notamment pour but de proposer un procédé de traitement destiné à traiter une partie au moins de l'intérieur d'une installation de chauffage/climatisation IC chargée de contrôler l'aérothermie dans une enceinte H.

Dans ce qui suit, on considère, à titre d'exemple non limitatif, que l'enceinte H est un habitacle de véhicule automobile VA, comme par exemple une voiture. Mais l'invention n'est pas limitée à ce type d'enceinte. Elle concerne en effet tout type d'enceinte, et notamment les habitacles de véhicule, quel qu'en soit le type, les pièces ou salles de bâtiments et les vérandas.

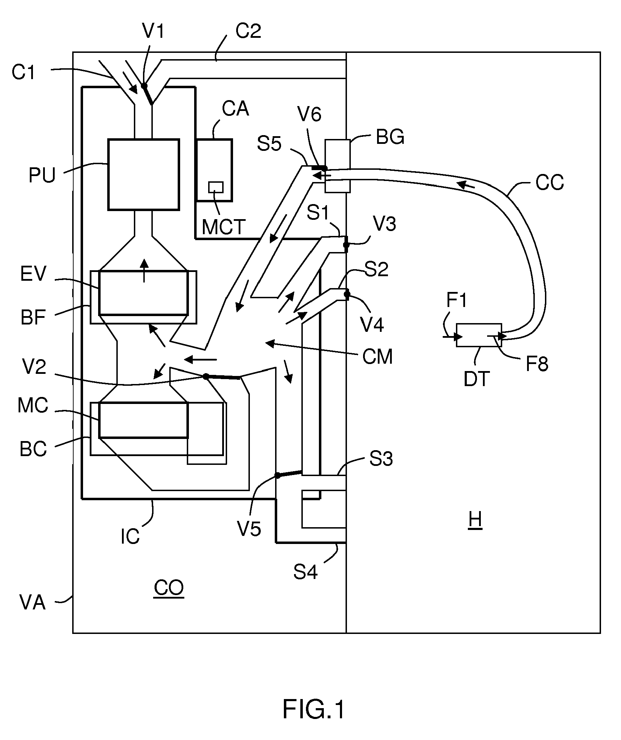

On a schématiquement et fonctionnellement représenté sur la figure 1 un exemple de réalisation d'une installation de chauffage/climatisation IC, ici installée dans un compartiment moteur CO d'un véhicule VA.

Comme illustré, cette installation (de chauffage/climatisation) IC comprend au moins un pulseur (ou groupe moto-ventilateur (ou GMV)) PU, une boucle chaude (ou boucle de chauffage) BC, une boucle froide (ou boucle de climatisation) BF, un volet d'alimentation V1, un volet de mixage V2 et des volets de distribution V3 à V6.

Le pulseur PU est alimenté en air extérieur et/ou en air recyclé (ou recirculé) par le volet d'alimentation (ou d'entrée d'air) V1. L'air extérieur est issu d'un premier conduit de circulation d'air C1 et l'air recyclé est issu de l'habitacle H via un second conduit de circulation d'air C2.

La position du volet d'alimentation V1, et donc les proportions d'air extérieur et d'air recyclé qui alimentent l'installation IC (et ici son pulseur PU), est/sont contrôlé(e)s par un calculateur CA, éventuellement en fonction d'instructions fournies par un passager. De même, les positions respectives du volet de mixage V2 et des volets de distribution V3 à V6 sont contrôlées par le calculateur CA, au moins en partie en fonction d'instructions fournies par un passager.

La boucle froide BF est alimentée en air par le pulseur PU. Elle comporte notamment un évaporateur EV (traversé par l'air qui est issu du pulseur PU), ainsi qu'un compresseur, un condenseur et un circuit dans lequel circule un fluide frigorigène et qui est couplé à l'évaporateur EV, au compresseur et au condenseur. La sortie de l'évaporateur EV est couplée à un conduit de circulation d'air qui alimente, d'une part, une chambre de mixage CM présentant une première entrée dont l'accès est contrôlé par le volet de mixage V2, et, d'autre part, la boucle chaude BC dont la sortie alimente une seconde entrée de la chambre de mixage CM.

La boucle chaude BC est destinée à chauffer l'air qui est issu (ici) de l'évaporateur EV et qui est destiné à l'habitacle H du véhicule VA, éventuellement après un mélange avec de l'air moins chaud présent dans la chambre de mixage CM. Elle comprend des moyens de chauffage MC comportant, par exemple, un aérotherme, comme par exemple un échangeur de chaleur, et/ou un radiateur électrique.

La chambre de mixage CM est connectée à des conduits de circulation d'air (dits de distribution) qui sont, ici, destinés à alimenter des sorties (ou bouches de distribution) S1 à S6 débouchant dans l'habitacle H ou dans une boîte à gants BG. Dans l'exemple non limitatif illustré, la sortie S1 est dédiée au dégivrage, la sortie S2 est dédiée à l'aération centrale (dans la planche de bord), la sortie S3 est dédiée aux pieds avant, la sortie S4 est dédiée aux pieds arrière, et la sortie S5 est dédiée à la réfrigération de la boîte à gants BG. Les accès à ces différentes sorties sont contrôlés (ici) par des volets de distribution V3 à V6, dont les positions respectives sont contrôlées par le calculateur CA. On notera que le volet de distribution V5 contrôle ici l'accès à un conduit de circulation d'air qui alimente les sorties de pieds avant S3 et de pieds arrière S4. Mais on pourrait prévoir deux volets de distribution pour contrôler les accès respectivement aux sorties de pieds avant S3 et de pieds arrière S4.

Le volet de mixage VM est destiné à contrôler la répartition de l'air, qui est fourni par le volet d'alimentation V1 (et qui a ici traversé l'évaporateur EV), entre la chambre de mixage CM et les moyens de chauffage MC. Sa position est contrôlée par le calculateur CA, éventuellement en fonction d'instructions fournies par un passager.

Les fonctionnements respectifs du pulseur PU et des boucles froide BF et chaude BC sont contrôlés par le calculateur CA, éventuellement en fonction d'instructions fournies par un passager.

Dans l'exemple non limitatif illustré sur la figure 1, le véhicule VA comprend également un dispositif de traitement d'air DT installé, par exemple, dans une console centrale implantée entre les sièges avant (du conducteur et du passager avant). On notera que ce dispositif de traitement d'air DT pourrait être installé en un autre endroit du véhicule VA, et notamment dans une console du pavillon (ou du toit), de préférence sous une forme miniaturisée, ou dans le compartiment moteur CO, ou dans la planche de bord, ou dans un siège, ou encore dans le coffre.

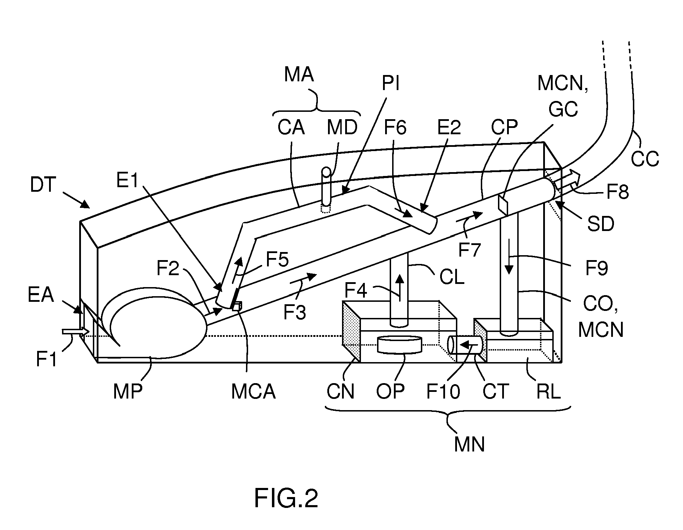

On a schématiquement représenté sur la figure 2 un exemple de réalisation non limitatif de dispositif de traitement d'air DT comprenant notamment des moyens de nébulisation (ou nébuliseur) MN, un pulseur MP et un conduit principal CP.

Le pulseur MP est alimenté électriquement (ici par le réseau électrique du véhicule VA), et comprend une entrée propre à prélever de l'air au niveau d'une entrée d'air EA (flèche F1), débouchant de préférence dans l'habitacle H, et une sortie connectée à l'entrée du conduit principal CP afin de l'alimenter en flux d'air (flèche F2).

Les moyens de nébulisation (ou nébuliseur) MN sont agencés de manière à produire des gouttes très petites en suspension (sous la forme d'un "brouillard" ou d'une "brume") à partir d'un liquide. Typiquement, les gouttes présentent un diamètre compris entre environ 2 μm et environ 5 μm. Le liquide à nébuliser est par exemple de l'eau. On notera que cette eau peut être éventuellement déminéralisée.

Toute technique de nébulisation connue de l'homme de l'art peut être utilisée. A titre d'exemple, et comme illustré non limitativement sur la figure 2, le nébuliseur MN peut comprendre une chambre de nébulisation CN contenant un liquide à nébuliser (ici de l'eau) et au moins un oscillateur piézo-électrique OP qui vibre à très haute fréquence lorsqu'il est alimenté en tension (ici par le réseau électrique du véhicule VA). Par exemple, dans le cas d'un nébuliseur ultrasonique, la surface vibrante est actionnée par des ultrasons (c'est-à-dire selon une fréquence supérieure à 20000 Hz). Cet oscillateur piézo-électrique OP est immergé dans l'eau à nébuliser afin de générer à la surface de cette eau une brume ou un brouillard composé(e) de gouttes de dimensions microscopiques.

Comme illustré, la chambre de nébulisation CN peut présenter une entrée couplée, via un conduit de transfert CT, à un réservoir RL qui est destiné à l'alimenter en liquide à nébuliser (flèche F10).

Les gouttes nébulisées sont destinées à alimenter le conduit principal CP au niveau d'une partie intermédiaire (flèche F4), éventuellement via un conduit de liaison CL, comme illustré.

Le conduit principal CP est propre, en fonctionnement standard, à canaliser une partie au moins du flux d'air pulsé qui est généré par le pulseur MP et les gouttes nébulisées qui sont produites par le nébuliseur MN jusqu'à une sortie SD, qui communique avec l'habitacle (ou enceinte) H.

On notera que dans l'exemple non limitatif illustré sur la figure 2 le dispositif de traitement d'air DT comprend en outre des moyens d'approvisionnement MA agencés de manière à fournir, sur ordre, un produit de traitement destiné à être mélangé au liquide avant qu'il ne soit transformé en gouttes nébulisées ou bien au flux d'air pulsé et aux gouttes nébulisées (comme illustré).

Dans l'exemple non limitatif illustré sur la figure 2, les moyens d'approvisionnement MA sont agencés de manière à alimenter le conduit principal CP en produit de traitement volatil diffusé en aval des moyens de nébulisation MN. Mais dans une première variante, ils (MA) pourraient alimenter le conduit principal CP en produit de traitement volatil diffusé en amont des moyens de nébulisation MN, et dans une seconde variante, ils (MA) pourraient alimenter le réservoir RL (par exemple via une cartouche amovible (consommable)) en produit de traitement destiné à être mélangé au liquide qu'il stocke.

Les moyens d'approvisionnement MA illustrés comprennent des moyens de diffusion MD et un conduit auxiliaire CA. Ces moyens de diffusion MD sont agencés pour diffuser un produit de traitement volatil en présence d'un flux d'air pulsé. A titre d'exemple, ils (MD) peuvent se présenter sous la forme d'une cartouche stockant un produit de traitement volatil et clippée ou vissée dans une partie intermédiaire PI du conduit auxiliaire CA. Par exemple, la paroi de la cartouche peut comporter au moins une fenêtre (ou des ouvertures) destinée(s) à permettre au flux d'air de venir lécher le produit de traitement volatil.

Le produit de traitement volatil peut être un produit décontaminant (par exemple pour éviter la propagation d'une maladie contagieuse) ou un produit désinfectant (par exemple pour lutter contre le développement de bactéries ou de microbes).

Le conduit auxiliaire CA comporte des première E1 et seconde E2 extrémités connectées au conduit principal CP respectivement (ici) en amont et en aval du conduit de liaison CL des moyens de nébulisation MN. La première extrémité E1 est destinée à prélever une partie au moins du flux d'air qui est canalisé dans le conduit principal CP (flèche F5), afin que cette partie entraîne le produit de traitement volatil diffusé par les moyens de diffusion MD et collecté par la partie intermédiaire PI de son conduit auxiliaire CA (flèche F6). La seconde extrémité E2 est ici destinée à alimenter le conduit principal CP en produit de traitement volatil diffusé, collecté et entraîné.

Le conduit auxiliaire CA comprend au voisinage de sa première extrémité E1 des moyens de contrôle d'accès MCA destinés à autoriser ou interdire l'accès aux moyens de diffusion MD du flux d'air généré par le pulseur MP, en fonction d'une commande fournie (ici) par le calculateur CA. Ces moyens de contrôle d'accès MCA peuvent comprendre un volet (ou clapet) motorisé pouvant être placé dans un état ouvert ou un état fermé en fonction d'une commande.

Comme illustré non limitativement sur la figure 2, le dispositif de traitement d'air DT peut également comprendre des moyens de collection MCN connectés à son conduit principal CP au voisinage de la sortie SD et agencés pour collecter des condensats de liquide, résultant de la condensation d'une partie des gouttes nébulisées, afin qu'il ne soient pas diffusés dans l'habitacle H. Ces moyens de collection MCN peuvent, par exemple, comporter une grille GC dont les trous présentent des dimensions supérieures à celles des gouttes nébulisées (par exemple, et non limitativement, 10 μm ou 20 μm) afin de les laisser passer et de ne retenir que les condensats. L'évacuation de ces condensats hors du conduit principal CP peut se faire au moyen d'un conduit d'évacuation CO, qui communique avec le conduit principal CP éventuellement via un bac à condensats (non représenté). Dans l'exemple non limitatif illustré sur la figure 2, le conduit d'évacuation CO alimente le réservoir RL en condensats collectés afin qu'ils puissent être réutilisés par le nébuliseur MN. Mais, ces condensats collectés pourraient être éventuellement évacués à l'extérieur de l'habitacle H, au travers du plancher du véhicule VA.

L'invention propose de mettre en oeuvre un procédé de traitement destiné à traiter une partie au moins de l'intérieur de l'installation IC.

Un procédé de traitement selon l'invention comprend deux étapes (i) et (ii).

L'étape (i) consiste à coupler manuellement, via un conduit de couplage CC, une sortie de l'installation IC (qui devient alors une entrée) à une sortie du dispositif de traitement d'air DT. On notera que dans l'exemple non limitatif illustré, on utilise ici avantageusement un dispositif de traitement d'air DT qui est installé dans le véhicule VA. Mais dans une variante de réalisation on pourrait utiliser un dispositif de traitement d'air DT portatif, extérieur au véhicule VA, et que l'on vient de préférence placer temporairement dans l'habitacle H. Dans tous les cas, le dispositif de traitement d'air DT qui est couplé à une sortie de l'installation IC doit être capable de délivrer un flux d'air pulsé et traité, par adjonction de gouttes très petites obtenues par nébulisation et mélangées avec un produit de traitement.

Dans l'exemple de réalisation non limitatif illustré sur la figure 1, le conduit de couplage CC est couplé à la sortie S5 qui débouche dans la boîte à gants BG et qui constitue temporairement une entrée (pendant le traitement). Mais ce couplage pourrait se faire au niveau d'une autre sortie de l'installation IC (par exemple S2, S3 ou S4), ou bien au niveau d'une sortie de l'installation IC (non représentée) dédiée spécifiquement au traitement de cette dernière (IC), d'accès facile (éventuellement dans le compartiment moteur CO et débouchant éventuellement directement dans la chambre de mixage CM), et obturée par un bouchon (ou capot) en dehors des phases de traitement.

Le conduit de couplage CC est un accessoire qui est destiné soit à être stocké dans le véhicule VA, soit à être rapporté dans le véhicule VA. Au moins dans le première alternative il peut se présenter sous la forme d'un tuyau flexible de type accordéon, de manière à occuper un volume réduit une fois replié.

L'étape (ii), du procédé de traitement, consiste au moins à faire fonctionner le dispositif de traitement d'air DT afin de faire pénétrer le flux d'air traité (et éventuellement pulsé) à l'intérieur de l'installation IC, via la sortie prévue à cet effet (ici S5), pour traiter une partie au moins de l'intérieur de cette installation IC.

On comprendra que dans l'étape (ii) le pulseur PU de l'installation IC ne fonctionne pas, afin qu'il ne produise pas de flux d'air dont le sens d'écoulement serait opposé à celui du flux d'air traité (et éventuellement pulsé) qui est issu du dispositif de traitement d'air DT.

De préférence, dans l'étape (ii) le flux d'air, qui est utilisé par le dispositif de traitement d'air DT pour assurer le traitement, est aspiré dans l'habitacle (ou enceinte) H avant d'être éventuellement pulsé et traité (ici) dans le conduit principal CP.

Egalement de préférence, dans l'étape (ii) il est avantageux de placer dans une position fermée les volets de distribution d'air de l'installation IC, qui sont dédiés à l'aération de l'habitacle H (ici V3 à V5), et de placer le volet d'alimentation en air V1 de l'installation IC dans une position qui n'autorise qu'une alimentation en air extérieur à l'habitacle H. Cela permet en effet de créer une surpression dans l'installation IC lorsque dans le même temps le dispositif de traitement d'air DT aspire son air dans l'habitacle H et les portes et fenêtres du véhicule VA sont toutes fermées. On notera que cette surpression peut suffire à aspirer dans l'installation IC le flux d'air traité, sans qu'il ait été pulsé dans le dispositif de traitement d'air DT (et donc sans faire fonctionner le pulseur MP).

On notera que le traitement de l'intérieur de l'installation IC est par exemple contrôlé par le calculateur CA, et plus précisément par des moyens de contrôle MCT qu'il comprend, à réception d'une commande dédiée. Cette dernière peut être fournie par le conducteur du véhicule VA par action sur une touche dédiée d'une interface homme/machine (par exemple le combiné qui est installé dans la partie centrale de la planche de bord) ou d'une télécommande communiquant par voie d'ondes avec le véhicule VA, ou bien par sélection ou saisie d'une option dédiée dans un menu affiché sur l'écran de l'interface homme/machine précitée.

On notera également qu'il est préférable que le traitement ne soit initié que lorsque le véhicule VA est entièrement fermé (mais pas obligatoirement verrouillé) et ne comporte pas de passager, de manière à éviter qu'un passager soit gêné par de l'air traité qui serait parvenu à revenir dans l'habitacle H en raison d'une mauvaise étanchéité de l'un des volets de distribution V3 à V5 contrôlant l'accès à l'une des sorties S1 à S4.

On notera également qu'il est avantageux que dans l'étape (ii) on place le volet de mixage V2 dans une position ouverte qui permet au flux d'air traité parvenu dans la chambre de mixage CM de parvenir jusqu'à l'évaporateur EV. Ainsi, on peut non seulement traiter un ou plusieurs conduits et la chambre de mixage CM, mais également une partie au moins de l'évaporateur EV (et notamment sa face aval qui est opposée au pulseur PU), ainsi qu'éventuellement l'aérotherme MC de la boucle chaude BC.

Lorsque le calculateur CA reçoit une commande de traitement, les moyens de contrôle MCT qu'il comprend peuvent, par exemple, commencer par déterminer si le véhicule VA ne comprend pas de passager et si ses portes et fenêtres sont toutes fermées. Si cette double condition est remplie, les moyens de contrôle MCT déclenchent, d'une part, le placement du volet d'admission d'air V1 dans une position qui n'autorise que l'entrée d'air extérieur, le placement des volets de distribution V3 à V5 dans une position totalement fermée et le placement du volet de distribution V6 dans une position totalement ouverte, ainsi qu'éventuellement le placement du volet de mixage V2 dans une position ouverte, et, d'autre part, la mise en fonctionnement du dispositif de traitement DT dans un mode dédié au mélange de produit de traitement avec le flux d'air (éventuellement pulsé) (c'est-à-dire en plaçant le volet MCA dans une position totalement ouverte). La phase de traitement dure alors pendant une durée prédéfinie, par exemple comprise entre environ 5 minutes et environ 10 minutes. Lorsque cette phase est terminée, les moyens de contrôle MCT peuvent, par exemple, déclencher l'arrêt du dispositif de traitement DT, puis éventuellement replacer l'installation dans l'état dans lequel elle se trouvait initialement (c'est-à-dire avant le début du traitement).

## Revendications

1. Procédé de traitement d'une installation de chauffage/climatisation (IC) couplée à une enceinte (H), **caractérisé en ce qu'**il comprend une étape (i) dans laquelle on couple, via un conduit de couplage (CC), une sortie (S5) de ladite installation (IC) à une sortie d'un dispositif de traitement d'air (DT) propre à délivrer un flux d'air traité, par adjonction de gouttes très petites obtenues par nébulisation et mélangées avec un produit de traitement, et une étape (ii) dans laquelle on fait fonctionner ledit dispositif de traitement d'air (DT) afin de faire pénétrer ledit flux d'air traité à l'intérieur de ladite installation (IC), via ladite sortie (S5), pour traiter une partie au moins de l'intérieur de cette installation (IC).

2. Procédé selon la revendication 1, **caractérisé en ce que** dans l'étape (ii) ledit flux d'air est aspiré dans ladite enceinte (H) avant d'être traité.

3. Procédé selon la revendication 2, **caractérisé en ce que** dans l'étape (ii) on place des volets de distribution d'air dédiés à l'aération de l'enceinte (H) et un volet d'alimentation en air de ladite installation (IC) respectivement dans une position fermée et dans une position n'autorisant qu'une alimentation en air extérieur à ladite enceinte (H), de manière à créer une surpression dans ladite installation (IC).

4. Procédé selon l'une des revendications 1 à 3, **caractérisé en ce que** ledit flux d'air est pulsé avant d'être traité.

5. Procédé selon l'une des revendications 1 à 4, **caractérisé en ce que** l'on traite certains au moins des conduits de circulation d'air et au moins un évaporateur (EV) que comprend ladite installation (IC)

6. Procédé selon l'une des revendications 1 à 5, **caractérisé en ce que** ledit produit de traitement est choisi dans un groupe comprenant au moins un produit décontaminant et un produit désinfectant.

7. Procédé selon l'une des revendications 1 à 6, **caractérisé en ce qu'**à l'étape (ii) on commence par déterminer si ladite enceinte (H) ne comprend pas de personne et si des portes et fenêtres qu'elle comprend sont toutes fermées, et dans l'affirmative on fait fonctionner ledit dispositif de traitement d'air (DT).

8. Procédé selon l'une des revendications 1 à 7, **caractérisé en ce que** l'on réalise la nébulisation dudit liquide par effet piézoélectrique.

9. Procédé selon l'une des revendications 1 à 8, **caractérisé en ce qu'**il est adapté au traitement d'une installation de chauffage/climatisation (IC) couplée à une enceinte constituant un habitacle de véhicule (VA).

10. Procédé selon la revendication 9, **caractérisé en ce que** dans l'étape (i) on couple ledit conduit de couplage (CC) à une sortie (S6) propre à alimenter en air réfrigéré une boîte à gants (BG) dudit véhicule (VA).

## Patentansprüche

1. Verfahren zum Behandeln einer Heiz-/Klimaanlage (IC), die an einen geschlossenen Raum (H) angeschlossen ist, **dadurch gekennzeichnet, dass** es einen Schritt (i) umfasst, bei dem man über eine Anschlussleitung (CC) einen Ausgang (S5) der besagten Anlage (IC) an einen Ausgang einer Luftbehandlungsvorrichtung (DT) anschließt, die geeignet ist, um durch das Beifügen sehr kleiner Tröpfchen, die man durch Zerstäubung erhält und die mit einem Behandlungsmittel vermengt werden, einen behandelten Luftstrom abzugeben, sowie einen zweiten Schritt (ii), bei dem man die besagte Luftbehandlungsvorrichtung (DT) betreibt, um den besagten behandelten Luftstrom über den besagten Ausgang (S5) ins Innere der besagten Anlage (IC) eindringen zu lassen, um zumindest einen Teil des Inneren dieser Anlage (IC) zu behandeln.

2. Verfahren nach Anspruch 1, **dadurch gekennzeichnet, dass** im Schritt (ii) der besagte Luftstrom in den besagten geschlossenen Raum (H) eingesaugt wird, bevor er behandelt wird.

3. Verfahren nach Anspruch 2, **dadurch gekennzeichnet, dass** man im Schritt (ii) Luftverteilungsklappen, die zur Lüftung des geschlossenen Raums (H) bestimmt sind, sowie eine Luftzufuhrklappe der besagten Anlage (IC) jeweils in eine geschlossene Position und in eine Position stellt, die nur eine Zufuhr von Luft außerhalb des geschlossenen Raums (H) freigibt, um einen Überdruck in der besagten Anlage (IC) zu erzeugen.

4. Verfahren nach einem der Ansprüche 1 bis 3, **dadurch gekennzeichnet, dass** der besagte Luftstrom pulsiert wird, bevor er behandelt wird.

5. Verfahren nach einem der Ansprüche 1 bis 4, **dadurch gekennzeichnet, dass** man zumindest bestimmte der Luftzirkulationsleitungen und zumindest einen Verdampfer (EV) behandelt, die in der besagten Anlage (IC) enthalten sind.

6. Verfahren nach einem der Ansprüche 1 bis 5, **dadurch gekennzeichnet, dass** das besagte Behandlungsmittel aus einer Gruppe ausgewählt wird, die zumindest ein Dekontaminierungsmittel und ein Desinfektionsmittel umfasst.

7. Verfahren nach einem der Ansprüche 1 bis 6, **dadurch gekennzeichnet, dass** man im Schritt (ii) damit beginnt, zu bestimmen, ob im besagten geschlossenen Raum (H) auch niemand zugegen ist und ob die Türen und Fenster, die er umfasst, allesamt geschlossen sind, und man, falls dies der Fall ist, die besagte Luftbehandlungsvorrichtung (DT) in Betrieb nimmt.

8. Verfahren nach einem der Ansprüche 1 bis 7, **dadurch gekennzeichnet, dass** man die Zerstäubung der besagten Flüssigkeit durch piezoelektrischen Effekt durchführt.

9. Verfahren nach einem der Ansprüche 1 bis 8, **dadurch gekennzeichnet, dass** es sich zur Behandlung einer Heiz-/Klimaanlage (IC) eignet, die an einen geschlossenen Raum angeschlossen ist, der einen Fahrgastraum eines Fahrzeugs (VA) darstellt.

10. Verfahren nach Anspruch 9, **dadurch gekennzeichnet, dass** man im Schritt (i) die besagte Anschlussleitung (CC) an einen Ausgang (S6) anschließt, der geeignet ist, ein Handschuhfach (BG) des besagten Fahrzeugs (VA) mit gekühlter Luft zu versorgen.

## Claims

1. Treatment process of a heating / air conditioning (IC) installation coupled to a housing (H), **characterised in that** this includes a stage (i) in which is coupled, via a coupling conduit (CC), an output (S5) from the said installation (IC) to an output of a clean air treatment device (DT) to deliver a treated air flow, by addition of very small droplets obtained by nebulisation and mixed with a treatment product, and a stage (ii) in which the said air treatment device (DT) is operated in order to introduce the said treated air flow into the interior of the said installation (IC), via the said outlet (S5), to treat at least part of the interior of this installation (IC).

2. Process according to claim 1 **characterised in that** in the stage (ii) the said air is drawn into the said housing (H) before being treated.

3. Process according to claim 2 **characterised in that** in the stage (ii) air distribution vanes dedicated to the housing (H) aeration and a vane for the air supply of the said installation (IC) are moved respectively to a closed position and to a position only authorising a supply of external air to the said housing (H), in such a way as to create a higher pressure in the said installation (IC).

4. Process according to one of the claims 1 to 3 **characterised in that** the said air flow is pulsed before being treated.

5. Process according to one of the claims 1 to 4, **characterised in that** at least the air circulation ducts and at least one evaporator (EV), which comprises the aforesaid installation (IC), are treated

6. Process according to one of the claims 1 to 5, **characterised in that** the said treatment product is chosen from a group including at least one decontaminating product and one disinfecting product.

7. Process according to one of the claims 1 to 6, **characterised in that** at the stage (ii) which begins by determining if the said housing (H) does not include persons and if the doors and windows that it includes are all closed, and if affirmative the said air treatment device (DT) comes into operation.

8. Process according to one of the claims 1 to 7, **characterised in that** nebulisation of the said liquid is achieved by piezoelectric effect.

9. Process according to one of the claims 1 to 8, **characterised in that** it is suitable for treatment of a heating/air conditioning system (IC) coupled to a housing making up a vehicle passenger compartment (VA).

10. Process according to claim 9, **characterised in that** in this stage (i) the coupling duct (CC) is connected to an outlet (S6) designated to supply refrigerated air to the glove box (BG) of the said vehicle (VA).
